# EUROPÄISCHE PATENTSCHRIFT

(11) **EP 2 703 245 B1**
(45) Veröffentlichungstag und Bekanntmachung des Hinweises auf die Patenterteilung: **11.09.2019**
(21) Anmeldenummer: 13175006.9
(22) Anmeldetag: 04.07.2013
(51) Int. Cl.: B61F 5/10

(54) **Luftfedersystem für ein Schienenfahrzeug**
Pneumatic suspension system for a rail vehicle
Système de suspension pneumatique pour un véhicule ferroviaire

(30) Priorität: 30.08.2012 DE 202012103305 U
(43) Veröffentlichungstag der Anmeldung: 05.03.2014
(73) Patentinhaber: ContiTech Luftfedersysteme GmbH, 30165 Hannover (DE)
(72) Erfinder: Kranz, Harald, 31008 Elze (DE); Korduan, Olaf, 30625 Hannover (DE)
(74) Vertreter: Kilsch, Armin Ralph

(56) Entgegenhaltungen:
- EP-A1- 1 657 467
- EP-A1- 2 251 562
- EP-A2- 1 006 036
- WO-A1-2004/109149
- FR-A1- 2 117 872
- FR-A1- 2 311 670
- FR-A1- 2 663 100
- GB-A- 2 156 946
- US-A- 3 074 709

## Beschreibung

Die Neuerung betrifft ein Luftfedersystem für ein Schienenfahrzeug, angeordnet als Sekundärfedersystem zwischen einem gefederten Wagenkasten und einem als Fahrwerk dienenden Drehgestell oder Fahrwerksschemel. Das Federsystem weist eine Luftfeder mit einem Luftfedervolumen in einem Arbeits- oder Druckraum auf, welcher in einem zwischen Luftfederdeckel, der so genannten Oberplatte, und fahrwerkseitiger Felge angeordnetem Luftfederbalg ausgebildet ist.

Der Luftfederdeckel bzw. die Oberplatte / obere Wand steht mit dem Wagenkasten in Verbindung. Weiterhin weist das Federsystem ein mit dem Arbeits- oder Druckraum zusammenwirkendes und im Luftfederdeckel ausgeformtes Zusatzvolumen auf, sowie eine unterhalb der Luftfeder angeordnete und mit letzterer in einer Reihenschaltung zusammenwirkende Zusatzfeder aus elastomerem Werkstoff, vorzugsweise aus Gummi.

Weiterhin befindet sich ein Puffer/Anschlagpuffer aus elastomerem Werkstoff im Arbeits- oder Druckraum. Der Puffer/Anschlagpuffer ist zwischen karosserieseitigem Luftfederdeckel und fahrwerkseitiger Felge wirkend vorgesehen. Als Felge wird bei einem Luftfedersystem für ein Schienenfahrzeug üblicherweise der untere Sitz des Luftfederbalges angesehen. Dieser Sitz befindet sich bei einer Reihenschaltung der Federn üblicherweise auf der Zusatzfeder.

Im normalen Betriebszustand eines solchen Luftfedersystems wird das Zusatzvolumen verwendet, um die Kennung der Federung zu verändern und damit eine komfortable "weichere" Federung einzustellen.

Solche Federsysteme sind für Schienenfahrzeuge bekannt. Die Luftfederung wirkt im Betriebszustand zusammen mit einer Zusatzfeder aus elastomerem Werkstoff. Darüberhinaus ist oft ein Puffer vorgesehen, ebenfalls aus elastomerem Werkstoff, welche zwischen Karosserie bzw. Wagenkasten und Fahrwerk bzw. Fahrgestell oder Fahrschemel des Fahrzeuges so angeordnet ist, dass bei einem Ausfall der Luftfeder die Karosserie am Fahrwerk durch den Puffer und die Zusatzfeder abgestützt wird.

Es gibt auch Konstruktionen, bei denen kein separater Puffer vorhanden ist und die Zusatzfeder die Funktion allein aufnimmt. In diesen Fällen setzt bei Luftausfall dann die Oberplatte bzw. der Luftfederdeckel direkt auf der Felge auf.

Die gelegentlich mit einer gewissen Unschärfe verwendeten Begriffe "Primärfederung / Primärfedersystem" und "Sekundärfederung / Sekundärfedersystem" sollen hier kurz definiert werden:
- Unter einer "Primärfederung" versteht man bei heutigen Fahrzeugen die erste und grundlegende Federung zwischen der ungefederten Radmasse und dem Fahrgestell bzw. dem Achsträger eines Fahrzeugs. Bei einem PKW oder LKW wird diese Primärfederung durch die federnden Eigenschaften eines Luftreifens bereitgestellt, d.h. der Luftreifen ist die "Primärfeder".
   Bei einem Schienenfahrzeug mit Rädern aus Metall ist es demgegenüber erforderlich, die die Radachse mit dem Radsatz aufnehmenden Achsgehäuse gegenüber dem Drehgestell/Fahrgestell mit einer Primärfederung abzufedern. Diese Primärfederung besteht üblicherweise aus material- oder formelastischen Bauteilen, wie etwa Schraubenfedern, Blattfedern, Gummi-Metall-Federn etc. und ist in der Regel zur Federung hochfrequenter Belastungen ausgelegt. Dies ist auch bei modernen Rädern üblich, die zur Reduzierung der Geräuschentwicklung aus einer inneren Radscheibe, einem umgebenden Gummielement und schließlich einem äußeren Radkranz aufgebaut sind.
- Unter einer "Sekundärfederung" versteht man bei Fahrzeugen die Federung zwischen dem Fahrgestell bzw. dem Achsträger eines Fahrzeugs und seiner Karosserie oder seinem Aufbau bzw. Wagenkasten. Bei PKW und LKW wird diese Sekundärfederung durch gedämpfte Stahlfedern, Luftfedern oder Federbeine zwischen Fahrwerk und Karosserie erreicht.

Neben Konstruktionen mit Hydrofedern besteht eine Bauart einer solchen Sekundärfederung für Schienenfahrzeuge in der auch hier beanspruchten besonders komfortabler Ausführung aus einer Luftfeder und einer Gummi-Metall-Feder als Zusatzfeder, welche in Reihe geschaltet sind. Die Luftfeder mit Zusatzvolumen dient dabei auch z.B. der beladungsabhängigen Höhenregulierung und ist auf niederfrequente Belastungen ausgelegt.

Die Regelung des Fahrniveaus erfolgt üblicherweise durch die Sekundärfederung unter Berücksichtigung der Gesamthöhe bzw. des gesamtem Federweges des Sekundärfederungssystems, wobei sich der Federweg aus den Federwegen/Federhöhen der beiden Komponenten, d.h. Luftfeder und der Zusatzfeder ergibt, wenn diese beiden in Reihe geschaltet sind. Im Allgemeinen erfolgt die Regelung so, dass bei unterschiedlichen Beladungszuständen eine konstante Höhe eingestellt wird.

Die US 3,826,507 offenbart eine Luftfeder für ein Schienenfahrzeug, welche mit einer Zusatzfeder versehen ist. Die Zusatzfeder ist dabei als Blockfeder aus Gummi ausgebildet und größtenteils von der Luftfeder umgeben. Die Zusatzfeder ist zudem so angeordnet, dass der Wagenkasten bei einem Luftverlust in der Luftfeder auf der gleichzeitig als Notfeder ausgebildeten Zusatzfeder aufsetzen kann.

Auch die GB 2 156 946 A offenbart eine Luftfeder mit einer innerhalb des Luftfederbalgs angeordneten Gummi-Notfeder, hier mit einer progressiven Kennung, die bei einem Luftfdruck-Verlust als Stützelement für den Luftfederdeckel dient. Zusätzlich kann eine weitere Blockfeder unterhalb der Luftfeder angeordnet sein.

Die FR 2 663 100 A1 offenbart eine Luftfederung, die einen im Luftfederdeckel ausgebildetes Zusatzvolumen aufweist. Der Luftfederdeckel ist dabei so ausgebildet, dass das Zusatzvolumen im Wesentlichen den eigentlichen Luftfederbalg auf seinem Umfang umgibt.

Häufig wirken auf den Wagenkasten eines Schienenfahrzeuges recht starke Querkräfte, insbesondere bei starken lateralen Auslenkungen aufgrund von schnellen und/oder engen Kurvendurchfahrten. Diese Querkräfte müssen in den Fahrwerken abgefangen werden. Dies geschieht oft mit separaten Puffern oder Anschlägen am Wagenkasten bzw. am Drehgestell. Natürlich kann auch das zwischen Wagenkasten und Fahrwerk angeordnete Luftfedersystem sprungartig entstehende starke Lateralkräfte abfangen und einen zu großen Versatz des Wagenkastens verhindern. Dementsprechend sind die Bauteile der Luftfedersysteme, insbesondere der mit dem Wagenkasten verbundene Deckel der eigentlichen Luftfeder, erheblichen Belastungen durch stoßartige einwirkende Kräfte ausgesetzt.

Für die Neuerung bestand daher die Aufgabe, ein Luftfedersystem für Schienenfahrzeuge bereitzustellen, welches Notfeder und Zusatzfeder sowie ein für eine komfortable Federung erforderliches Zusatzvolumen aufweist und in der Lage ist, auch hohe Querkräfte schadlos zu aufzufangen und welches trotzdem eine kostengünstige Herstellung erlaubt.

Gelöst wird diese Aufgabe durch die Merkmale des Hauptanspruchs. Weitere vorteilhafte Ausbildungen sind in den Unteransprüchen offenbart.

Dabei ist der das Zusatzvolumen aufnehmende Luftfederdeckel topfförmig mit einer oberen Wand, einer seitlichen Wand und einem Flansch ausgebildet und insbesondere in seinen äußeren Randbereichen mit verstärkenden Konstruktionselementen versehen, wobei am Luftfederdeckel angeordnete und für den Betrieb des Luftfedersystems erforderliche Funktions- und Leitungselemente mit den Konstruktionselementen so verbunden und in letztere integriert sind, dass Funktionselemente und Leitungselemente und Konstruktionselemente zusammenwirkend die Steifigkeit und die Form- oder Gestaltfestigkeit des Luftfederdeckels erhöhen.

Durch eine solche Ausbildung wird ein Luftfedersystem bereitgestellt, das in seinen Abmessungen noch in den maximal zur Verfügung stehenden Bauraum einpassbar und dabei höchst belastbar ist. Erst durch die Integration aller Bauteile des Luftfederdeckels in die Festigkeitsauslegung erreicht man eine solche Steifigkeit und Gestaltfestigkeit, dass auch stoßartige Belastung sicher aufgefangen werden können, ohne dass Teile des Luftfederdeckels und damit nachfolgend Teile des Luftfedersystem Schaden nehmen. FEM Rechnungen bestätigen dies in überraschender und eindrucksvoller Weise.

Eine vorteilhafte Ausbildung besteht darin, dass die verstärkenden Konstruktionselemente in den Deckelbereichen, in denen Funktions- und Leitungselemente angeordnet sind, rippenförmig ausgebildet sind und die Funktions- und Leitungselemente am Flansch oder an der seitlichen Wand abstützen. Damit erreicht man eine sehr leichte Bauweise, ohne die Gesamtfestigkeit wesentlich zu vermindern.

Gleiches gilt für eine weitere vorteilhafte Ausbildung, die darin besteht, dass die verstärkenden Konstruktionselemente außerhalb der Deckelbereiche, in denen Funktions- und Leitungselemente angeordnet sind, als über die Höhe des Deckels sich verjüngende Verstärkungsrippen zwischen Flansch und Deckelwand ausgebildet sind. Solche sich "nach oben" und zur oberen Wand hin verjüngenden Rippen haben zusätzlich den Vorteil, dass der Baudurchmesser nicht erhöht und eine hohe Ringsteifigkeit des Deckels erreicht wird.

Eine weitere vorteilhafte Ausbildung besteht darin, dass mindestens eines der Funktions- und Leitungselemente der Luftanschlussstutzen für die Luftversorgung ist. Der Luftanschluss ist per se ein aufgrund des Innendrucks recht stabil ausgeführtes Bauteil, das durch die Innendruckbelastung im wesentlichen nur unter Ringspannungen steht und bei dem zusätzliche mechanische Druckbelastungen von außen eher kompensierend wirken.

Eine weitere vorteilhafte Ausbildung besteht darin, dass mindestens eines der Funktions- und Leitungselemente eine Halterung mit einem Anschlussflansch für die Karosserie bzw. den Wagenkasten ist. Auch hier findet insbesondere durch die Rippenform der Verstärkungselemente eine andere und bessere Verteilung von Lasteinwirkungen im Sinne der erfindungsgemäßen Lösung statt.

Eine weitere vorteilhafte Ausbildung besteht darin, dass der Luftfederdeckel mit Bauteilen oder Begrenzungseinrichtungen versehen ist, welche Anschlags- oder Prallflächen für Karosserie- oder Fahrwerksteile bereitstellen, die den Luftfederdeckel im Betriebszustand umgeben, wobei die Bauteile oder Begrenzungseinrichtungen mittels rippenförmig ausgebildeter Konstruktionselemente am Flansch, an der seitlichen Wand oder an Funktionsteilen abgestützt und die Rippen, d.h. die rippenförmigen Konstruktionselemente, längs der Hauptbelastungsrichtung beim Anschlag oder Aufprall von Karosserie- oder Fahrwerksteilen ausgerichtet sind. Mit einer solchen Konstruktion lassen sich Kraftspitzen mit lateralen Lastrichtungen in bestimmten "gefährdeten Bereichen" von vorn herein sicher und geplant auffangen, so dass erst gar keine Schäden am Deckel entstehen können.

Eine weitere vorteilhafte Ausbildung besteht darin, dass die rippenförmig ausgebildeten Konstruktionselemente sich teilweise kreuzen. Dies erhöht noch einmal die Steifigkeit und Lastaufnahmefähigkeit in Problembereichen, beispielsweise bei einem in der Nähe einer Anschlags- oder Prallfläche angeordneten Luftanschlussstutzen für die Luftversorgung.

Eine weitere vorteilhafte Ausbildung besteht darin, dass der Luftfederdeckel mit Konstruktionselementen, Funktions- und Leitungselementen und Bauteilen oder Begrenzungseinrichtungen als einteiliges Aluminiumgussteil ausgebildet ist und die obere Wand des Luftfederdeckels verschließbare Öffnungen aufweist, welche in Bauteile integriert sind, die zur Positionierung oder Halterung des Luftfederdeckels am Wagenkasten vorgesehen sind. Eine solche Ausführung vereinfacht insbesondere den kritischen Abkühl- oder Abschreckprozess zur Materialvergütung nach dem Gießen.

Dieser sehr sorgsam durchzuführende Vergütungsprozess erfolgt üblicherweise dadurch, dass der Luftfederdeckel zunächst in einem Ofen erhitzt wird und dann sehr schnell aufrecht, d.h. mit oben befindlicher oberer Wand und dadurch mit dem Flansch zuerst in ein Kühl-Öl getaucht wird. Bedingt durch die Form und die erforderlichen Abkühlkurven der einzelnen Deckelbereiche des Deckels ist es nötig, den Flansch, den Rand und die obere Wand möglichst gleichzeitig zu kühlen, um keine Spannungsrisse oder Inhomogenitäten zu erhalten..

Durch die Topfform bilden sich jedoch in den dann durch Kühl-Öl/Kühlflüssigkeit nach unten abgeschlossenen Bereichen des Zusatzvolumens Öldampf und Ölblasen, die den Abschreckprozess empfindlich stören können.. Bei den erfindungsgemäß vorgesehenen Öffnungen in aus konstruktiven Gründen notwendigen Bauteilen oder Zapfen in der oberen Wand des Luftfederdeckels, die nach Abkühlung und Fertigstellung des Luftfederdeckels mit z. B. gedichteten Schrauben verschließbar sind, kann das nicht passieren, da durch diese Öffnungen der beim Abschrecken entstehende Öldampf sowie eingeschlossene Luft problemlos austreten können.

Vorteilhafterweise wird ein solches Luftfedersystem bei einem Schienenfahrzeug eingesetzt.

Anhand eines Ausführungsbeispiels soll die Neuerung näher erläutert werden. Es zeigen
- Fig. 1: ein neuerungsgemäßes Luftfedersystem
- Fig. 2: das Luftfedersystem gemäß Fig. 1 in der Aufsicht
- Fig. 3: das Luftfedersystem gemäß Fig. 1 in einer perspektivischen Ansicht
- Fig. 4: den vorderen Teil eines schienengebundenen Kurzstreckentriebwagens mit einem neuerungsgemäßem Luftfedersystem

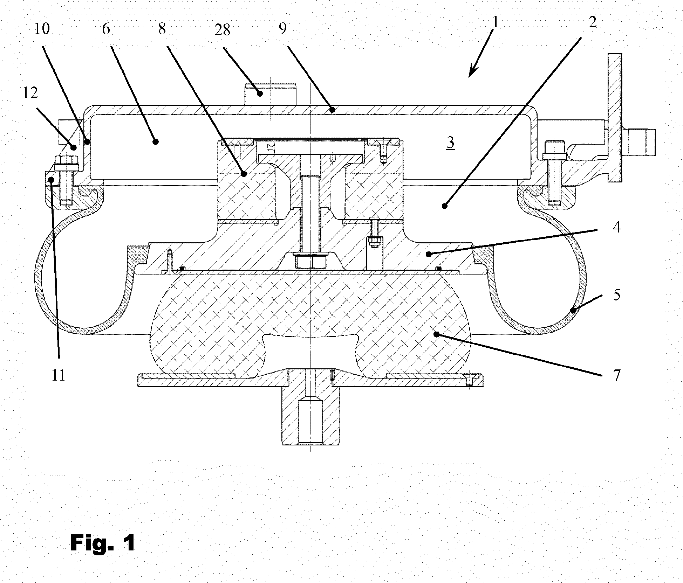

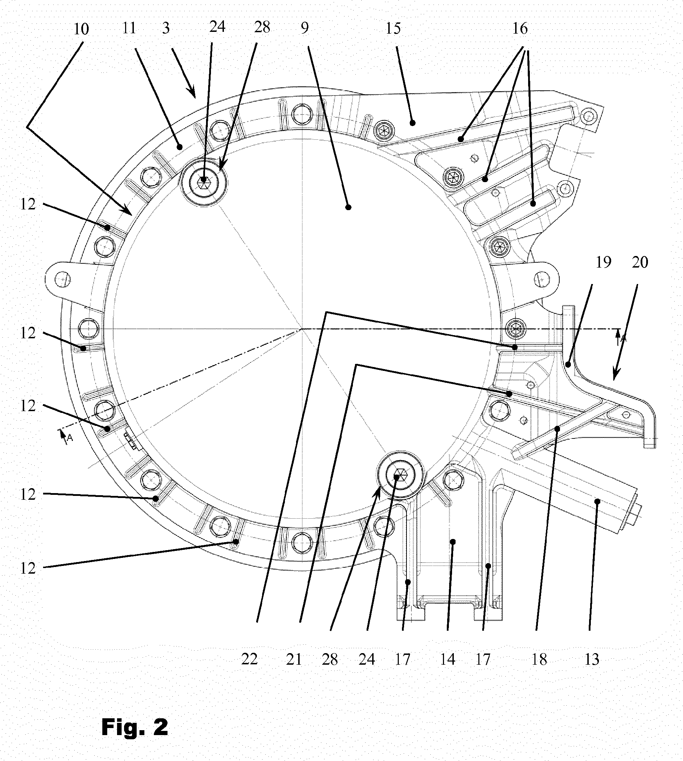

Fig. 1 zeigt ein neuerungsgemäßes Luftfedersystem 1 für ein Schienenfahrzeug im Schnitt A-A der Fig. 2, angeordnet zwischen einem Wagenkasten bzw. einer Karosserie und einem ungefedertem Fahrwerksteil, beide hier nicht näher dargestellt. Das Federsystem stellt hier das Sekundärfedersystem dar. Das Federsystem 1 weist eine Luftfeder mit einem Luftfedervolumen in einem Arbeits- oder Druckraum 2 auf, welcher in einem zwischen Luftfederdeckel 3 und fahrwerkseitiger Felge 4 angeordnetem Luftfederbalg 5 ausgebildet ist. Das mit dem Arbeits- oder Druckraum 2 zusammenwirkendes Zusatzvolumen 6 ist im Luftfederdeckel 3 ausgeformt.

Unterhalb der Luftfeder bzw. des Luftfederbalges 5 ist eine mit der Luftfeder in einer Reihenschaltung zusammenwirkende Zusatzfeder 7 aus Gummi angeordnet.

Das Luftfedersystem weist eine aus Gummi ausgebildete Notfeder 8 auf, die in Form eines Anschlagpuffers als Abstützung wirkt.

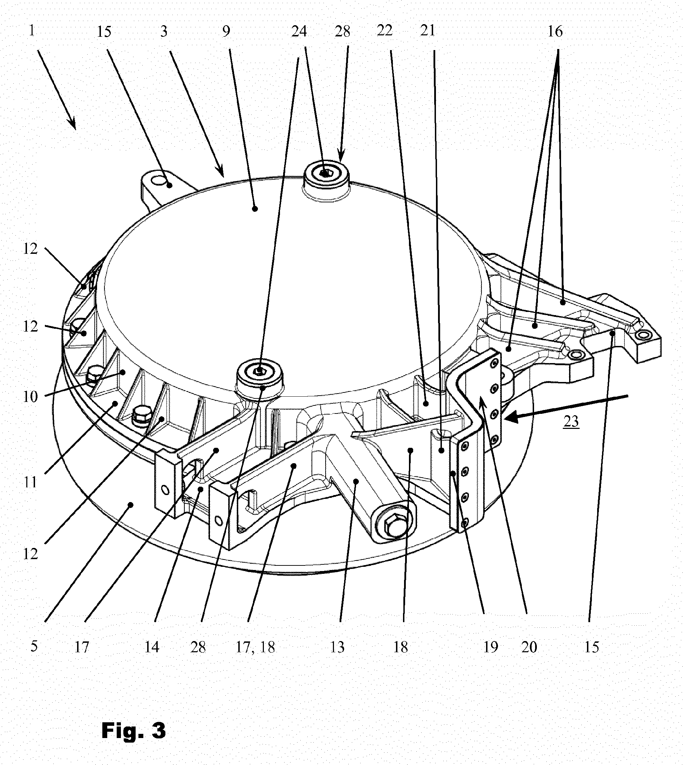

Fig. 2 zeigt das Luftfedersystem gemäß Fig. 1 in der Aufsicht von oben, während Fig. 3 das Luftfedersystem gemäß Fig. 1 in einer perspektivischen Ansicht von schräg oben zeigt.

In der Zusammenschau der Figuren, insbesondere der Fig. 2 und 3, erkennt man den topfförmig ausgebildeten Luftfederdeckel 3, der das Zusatzvolumen 6 aufnimmt.

Der Luftfederdeckel 3 weist eine obere Wand 9, eine seitliche Wand 10 und einen Flansch 11 auf ist in seinen äußeren Randbereichen mit rippenförmig ausgebildeten verstärkenden Konstruktionselementen 12 versehen, von denen hier der besseren Übersicht halber nur einige mit Bezugsziffern versehen sind.

Die am Luftfederdeckel 3 angeordneten und für den Betrieb des Luftfedersystems erforderliche Funktions- und Leitungselemente, hier der Luftanschlussstutzen 13 für die Luftversorgung und die Anschlussflansche 14 und 15 für den Wagenkasten sind mit den rippenförmigen Konstruktionselementen 16, 17 und 18 so verbunden und so in letztere integriert, dass Luftanschlussstutzen 13, Anschlussflansche 15 und Konstruktionselemente 16, 17 und 18 zusammenwirkend die Steifigkeit und die Form- oder Gestaltfestigkeit des Luftfederdeckels 3 deutlich erhöhen.

Luftanschlussstutzen 13, Anschlussflansche 14 und 15 und Konstruktionselemente 16, 17 und 18 sind dabei auch und ähnlich wie die Konstruktionselemente 12 am Flansch 11 bzw. an der seitlichen Wand 10 abgestützt.

Außerhalb der Deckelbereiche, in denen Luftanschlussstutzen 13 oder Anschlussflansche 14 oder 15 angeordnet sind, sind die verstärkenden Konstruktionselemente als über die Höhe des Deckels sich verjüngende Verstärkungsrippen 12 zwischen Flansch 11 und Deckelwand 10 ausgebildet.

Der Luftfederdeckel 3 ist darüber hinaus mit einer Begrenzungseinrichtung 19 versehen, welche eine Anschlags- oder Prallfläche 20 für solche Karosserie- oder Fahrwerksteile bereitstellt, die den Luftfederdeckel im Betriebszustand benachbart umgeben und die z.B. bei einer lateralen Auslenkungen des Wagenkastens an die Begrenzungseinrichtungen bzw. deren Anschlags- oder Prallflächen anschlagen können.

Die Begrenzungseinrichtung 19 ist mit den rippenförmig ausgebildeten Konstruktionselemente 21, 22 und 18 am Flansch 11, an der seitlichen Wand 10 und am Luftanschlussstutzen 13 abgestützt, wobei insbesondere die Hauptrippe 18 längs der Hauptbelastungsrichtung 23 beim Anschlag oder Aufprall ausgerichtet ist. Die Hauptrippe 18 kreuzt sich dabei mit dem rippenförmigen Konstruktionselement 21.

Der Luftfederdeckel 3 weist in seiner oberen Wand 9 verschließbare Öffnungen 24 auf, welche in Zapfen 28 integriert sind, die zur Positionierung des Luftfederdeckels 3 am Wagenkasten vorgesehen sind

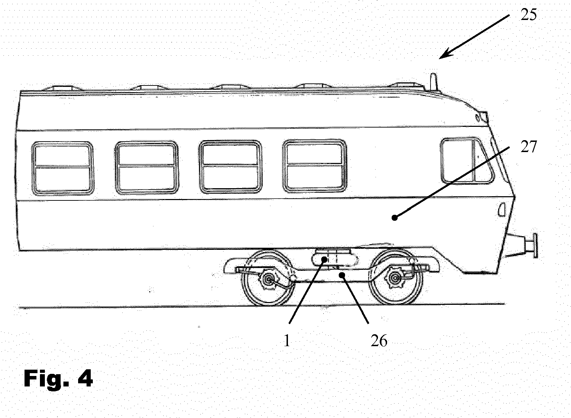

Fig. 4 zeigt noch einmal zur Verdeutlichung den vorderen Teil eines schienengebundenen Kurzstreckentriebwagens 25 mit dem erfindungsgemäßen Luftfedersystem. Der Fahrschemel bzw. das Fahrgestell 26 ist über das erfindungsgemäße Luftfedersystem 1 mit dem Wagenkasten 27 des Triebwagens 25 verbunden ist.

### Bezugszeichenliste

### (Teil der Beschreibung)

- 1: Luftfedersystem
- 2: Arbeits- oder Druckraum
- 3: Luftfederdeckel / Befestigungsplatte mit Zusatzvolumen
- 4: Felge
- 5: Luftfederbalg
- 6: Zusatzvolumen
- 7: Zusatzfeder
- 8: Notfeder
- 9: Obere Wand
- 10: Seitliche Wand
- 11: Flansch
- 12: Verstärkendes Konstruktionselement, rippenförmig
- 13: Luftanschlussstutzen
- 14: Anschlussflansch
- 15: Anschlussflansch
- 16: Verstärkendes Konstruktionselement, rippenförmig
- 17: Verstärkendes Konstruktionselement, rippenförmig
- 18: Verstärkendes Konstruktionselement, rippenförmig
- 19: Begrenzungseinrichtung
- 20: Anschlags- oder Prallfläche
- 21: Verstärkendes Konstruktionselement, rippenförmig
- 22: Verstärkendes Konstruktionselement, rippenförmig
- 23: Hauptbelastungsrichtung relativ zur Anschlags- und Prallfläche
- 24: verschließbare Öffnungen in der Obere Wand
- 25: Kurzstreckentriebwagen
- 26: Fahrgestell
- 27: Wagenkasten
- 28: Zapfen zur Positionierung des Luftfederdeckels am Wagenkasten

## Patentansprüche

1. Luftfedersystem (1) für ein Schienenfahrzeug (13), angeordnet als Sekundärfedersystem zwischen einem Wagenkasten (15) und einem als Fahrwerk dienenden Drehgestell (14), wobei das Federsystem folgende Einrichtungen aufweist:
- eine Luftfeder mit einem Luftfedervolumen in einem Arbeits- oder Druckraum (2), welcher in einem zwischen Luftfederdeckel (3) und fahrwerkseitiger Felge (4) angeordnetem Luftfederbalg (5) ausgebildet ist,
- ein mit dem Arbeits- oder Druckraum zusammenwirkendes und im Luftfederdeckel (3) ausgeformtes Zusatzvolumen (6),
- eine unterhalb der Luftfeder angeordnete und mit letzterer in einer Reihenschaltung zusammenwirkende Zusatzfeder (7) aus elastomerem Werkstoff, vorzugsweise aus Gummi,
- eine in Form eines Anschlagpuffers und ebenfalls aus elastomerem Werkstoff ausgebildete Notfeder (8) innerhalb des Arbeits- oder Druckraums (2), wobei die Notfeder (8) zwischen Luftfederdeckel (3) und fahrwerkseitiger Felge (4) wirkend vorgesehen ist,
**dadurch gekennzeichnet, dass** der das Zusatzvolumen (6) aufnehmende Luftfederdeckel (3) topfförmig mit einer oberen Wand (9), einer seitlichen Wand (10) und einem Flansch (11) ausgebildet und in seinen äußeren Randbereichen mit verstärkenden Konstruktionselementen (12, 16, 17, 18, 21, 22) versehen ist, wobei am Luftfederdeckel (3) angeordnete und für den Betrieb des Luftfedersystems erforderliche Funktions- und Leitungselemente (13, 14, 15) mit den Konstruktionselementen (12, 16, 17, 18, 21, 22) so verbunden und in letztere integriert sind, dass Funktionselemente und Leitungselemente und Konstruktionselemente zusammenwirkend die Steifigkeit und die Form- oder Gestaltfestigkeit des Luftfederdeckels (3) erhöhen.

2. Luftfedersystem nach Anspruch 1, bei dem die verstärkenden Konstruktionselemente (12, 16, 17, 18, 21, 22) in den Deckelbereichen, in denen Funktions- und Leitungselemente (13, 14, 15) angeordnet sind, rippenförmig ausgebildet sind und die Funktionselemente am Flansch oder an der seitlichen Wand abstützen.

3. Luftfedersystem nach Anspruch 1 oder 2, bei dem die verstärkenden Konstruktionselemente (12) außerhalb der Deckelbereiche, in denen Funktions- und Leitungselemente angeordnet sind, als über die Höhe des Deckels sich verjüngende Verstärkungsrippen zwischen Flansch (11) und seitlicher Wand (10) ausgebildet sind.

4. Luftfedersystem nach einem der Ansprüche 1 bis 3, bei dem mindestens eines der Funktions- und Leitungselemente der Luftanschlussstutzen (13) für die Luftversorgung ist.

5. Luftfedersystem nach einem der Ansprüche 1 bis 4, bei dem mindestens eines der Funktions- und Leitungselemente eine Halterung mit einem Anschlussflansch (14, 15) für die Karosserie bzw. den Wagenkasten ist.

6. Luftfedersystem nach einem der Ansprüche 1 bis 5, bei dem der Luftfederdeckel mit Bauteilen oder Begrenzungseinrichtungen (19) versehen ist, welche Anschlags- oder Prallflächen (20) für Karosserie- oder Fahrwerksteile bereitstellen, die den Luftfederdeckel im Betriebszustand benachbart umgeben, wobei die Bauteile oder Begrenzungseinrichtungen (19) mittels rippenförmig ausgebildeter Konstruktionselemente (18, 21, 22) am Flansch, an der seitlichen Wand oder an Funktions- und Leitungselementen abgestützt und mindestens eines der rippenförmigen Konstruktionselemente (18) längs der Hauptbelastungsrichtung (23) bei einem Anschlag oder Aufprall von Karosserie- oder Fahrwerksteilen ausgerichtet sind.

7. Luftfedersystem nach einem der Ansprüche 1 bis 6, bei dem die rippenförmig ausgebildeten Konstruktionselemente (18, 21) sich teilweise kreuzen.

8. Luftfedersystem nach einem der Ansprüche 1 bis 7, bei dem der Luftfederdeckel (3) mit Konstruktionselementen, Funktions- und Leitungselementen und Bauteilen oder Begrenzungseinrichtungen als einteiliges Aluminiumgussteil ausgebildet ist und die obere Wand (9) des Luftfederdeckels verschließbare Öffnungen (24) aufweist, welche in Bauteile (28) integriert sind, die zur Positionierung oder Halterung des Luftfederdeckels (3) am Wagenkasten vorgesehen sind.

9. Schienenfahrzeug mit einem Luftfedersystem nach Anspruch 1 bis 8.

## Claims

1. Air spring system (1) for a rail vehicle (13), arranged as a secondary spring system between a car body (15) and a bogie (14) which serves as running gear, wherein the spring system has the following devices:
- an air spring having an air spring volume in a working or pressure chamber (2) which is formed in an air spring bellows (5) arranged between air spring cover (3) and running-gear-side rim (4),
- an additional volume (6) which interacts with the working or pressure chamber and which is formed in the air spring cover (3),
- an additional spring (7) which is arranged below the air spring and which interacts with the latter in a series connection and which is composed of elastomer material, preferably of rubber,
- an emergency spring (8), which is in the form of a stop buffer and which is likewise composed of elastomer material, within the working or pressure chamber (2), wherein the emergency spring (8) is provided so as to act between air spring cover (3) and running-gear-side rim (4),
**characterized in that** the air spring cover (3) which accommodates the additional volume (6) is of pot-shaped form with an upper wall (9), a lateral wall (10) and a flange (11) and which is equipped, in its outer edge regions, with reinforcing structural elements (12, 16, 17, 18, 21, 22), wherein functional and line elements (13, 14, 15) which are arranged on the air spring cover (3) and which are required for the operation of the air spring system are connected to, and integrated into, the structural elements (12, 16, 17, 18, 21, 22) such that functional elements and line elements and structural elements in interaction increase the stiffness and the dimensional or form stability of the air spring cover (3).

2. Air spring system according to Claim 1, in which the reinforcing structural elements (12, 16, 17, 18, 21, 22) are, in the cover regions in which functional and line elements (13, 14, 15) are arranged, of rib-like form and support the functional elements on the flange or on the lateral wall.

3. Air spring system according to Claim 1 or 2, in which the reinforcing structural elements (12) are, outside the cover regions in which functional and line elements are arranged, formed as reinforcement ribs, which taper over the height of the cover, between flange (11) and lateral wall (10).

4. Air spring system according to any of Claims 1 to 3, in which at least one of the functional and line elements is the air connector piece (13) for the air supply.

5. Air spring system according to any of Claims 1 to 4, in which at least one of the functional and line elements is a holder with an attachment flange (14, 15) for the bodyshell or the car body.

6. Air spring system according to any of Claims 1 to 5, in which the air spring cover is equipped with components or delimiting devices (19) which provide abutment or impact surfaces (20) for bodyshell or running gear parts, which surfaces adjacently surround the air spring cover in the operating state, wherein the components or delimiting devices (19) are supported by means of structural elements (18, 21, 22) of rib-like form on the flange, on the lateral wall or on functional and line elements, and at least one of the rib-like structural elements (18) is oriented along the main loading direction (23) in the event of an abutment or impact of bodyshell or running gear parts.

7. Air spring system according to any of Claims 1 to 6, in which the structural elements (18, 21) of rib-like form at least partially cross one another.

8. Air spring system according to any of Claims 1 to 7, in which the air spring cover (3) with structural elements, functional and line elements and components or delimiting devices is formed as a unipartite aluminium cast part, and the upper wall (9) of the air spring cover has closable openings (24) which are integrated into components (28) which are provided for positioning or holding the air spring cover (3) on the car body.

9. Rail vehicle having an air spring system according to Claims 1 to 8.

## Revendications

1. Système à ressort pneumatique (1) pour un véhicule ferroviaire (13), agencé en tant que système à ressort secondaire entre une caisse du véhicule (15) et un bogie (14) servant de châssis de roulement, le système à ressort présentant les dispositifs suivants :
- un ressort pneumatique avec un volume de ressort pneumatique dans un espace de travail ou de pression (2) qui est réalisé dans un soufflet de ressort pneumatique (5) disposé entre un couvercle de ressort pneumatique (3) et une jante (4) du côté du châssis de roulement,
- un volume supplémentaire (6) coopérant avec l'espace de travail ou de pression et formé dans le couvercle de ressort pneumatique (3),
- un ressort supplémentaire (7) en matériau élastomère, de préférence en caoutchouc, disposé en dessous du ressort pneumatique et coopérant avec ce dernier dans un montage en série,
- un ressort de secours (8) réalisé sous la forme d'un tampon de butée et également en matériau élastomère à l'intérieur de l'espace de travail ou de pression (2), le ressort de secours (8) étant prévu de manière à agir entre le couvercle de ressort pneumatique (3) et la jante (4) du côté du châssis de roulement,
**caractérisé en ce que** le couvercle de ressort pneumatique (3) recevant le volume supplémentaire (6) est réalisé en forme de pot avec une paroi supérieure (9), une paroi latérale (10) et une bride (11) et est pourvu, dans ses régions de bords extérieures, d'éléments de construction de renforcement (12, 16, 17, 18, 21, 22), des éléments fonctionnels et de guidage (13, 14, 15) disposés au niveau du couvercle de ressort pneumatique (3) et nécessaires pour le fonctionnement du système à ressort pneumatique étant connectés aux éléments de construction (12, 16, 17, 18, 21, 22) et étant intégrés dans ceux-ci de telle sorte que les éléments fonctionnels, les éléments de guidage et les éléments de construction, de par leur coopération, augmentent la rigidité et la stabilité de forme ou de configuration du couvercle de ressort pneumatique (3).

2. Système à ressort pneumatique selon la revendication 1, dans lequel les éléments de construction de renforcement (12, 16, 17, 18, 21, 22) sont réalisés en forme d'ailettes dans les régions de couvercle dans lesquelles sont disposés les éléments fonctionnels et de guidage (13, 14, 15), et les éléments fonctionnels s'appuient au niveau de la bride ou au niveau de la paroi latérale.

3. Système à ressort pneumatique selon la revendication 1 ou 2, dans lequel les éléments de construction de renforcement (12), à l'extérieur des régions de couvercle dans lesquelles les éléments fonctionnels et de guidage sont disposés, sont réalisés sous forme d'ailettes de renforcement se rétrécissant sur la hauteur du couvercle entre la bride (11) et la paroi latérale (10).

4. Système à ressort pneumatique selon l'une quelconque des revendications 1 à 3, dans lequel au moins l'un des éléments fonctionnels et de guidage est la tubulure de raccordement d'air (13) pour l'alimentation en air.

5. Système à ressort pneumatique selon l'une quelconque des revendications 1 à 4, dans lequel au moins l'un des éléments fonctionnels et de guidage est une fixation avec une bride de raccordement (14, 15) pour la carrosserie ou la caisse du véhicule.

6. Système à ressort pneumatique selon l'une quelconque des revendications 1 à 5, dans lequel le couvercle de ressort pneumatique est pourvu de composants ou de dispositifs de limitation (19) qui fournissent des surfaces de butée ou d'impact (20) pour les pièces de la carrosserie ou du châssis de roulement qui entourent le couvercle de ressort pneumatique à proximité de celui-ci dans l'état de fonctionnement, les composants ou dispositif de limitation (19) étant supportés au moyen d'éléments de construction (18, 21, 22) réalisés en forme d'ailettes, au niveau de la bride, au niveau de la paroi latérale ou au niveau d'éléments fonctionnels et de guidage et au moins l'un des éléments de construction en forme d'ailettes (18) étant orienté le long de la direction de sollicitation principale (23) dans le cas d'une butée ou d'un impact de pièces de la carrosserie ou du châssis de roulement.

7. Système à ressort pneumatique selon l'une quelconque des revendications 1 à 6, dans lequel les éléments de construction (18, 21) réalisés en forme d'ailettes se croisent en partie.

8. Système à ressort pneumatique selon l'une quelconque des revendications 1 à 7, dans lequel le couvercle de ressort pneumatique (3) est réalisé avec des éléments de construction, des éléments fonctionnels et de guidage et des composants ou des dispositifs de limitation en tant que pièce moulée d'une seule pièce en aluminium et la paroi supérieure (9) du couvercle de ressort pneumatique présente des ouvertures refermables (24) qui sont intégrées dans des composants (28) qui sont prévus pour positionner ou fixer le couvercle de ressort pneumatique (3) à la caisse du véhicule.

9. Véhicule ferroviaire comprenant un système à ressort pneumatique selon les revendications 1 à 8.
